# DEMANDE DE BREVET EUROPEEN

(11) **EP 2 186 667 A1**
(43) Date de publication de la demande: **19.05.2010**
(21) Numéro de dépôt: 09151827.4
(22) Date de dépôt: 30.01.2009
(51) Int. Cl.: B60J 7/16

(54) **Véhicule automobile présentant un toit mobile destiné, en postion élevée, à ménager un espace de couchage et limitant l'augmentation de hauteur totale du véhicule en position fermée**

(30) Priorité: 14.11.2008 FR 0806387
(71) Demandeur: Gruau Microbus, 53942 Saint Berthevin (FR)
(72) Inventeur: Boscher, David, 35130 LA GUERCHE DE BRETAGNE (FR)
(74) Mandataire: Larcher, Dominique

(57) **Abrégé**

L'invention a pour objet un véhicule automobile, présentant un toit mobile (1) entre une position de fermée et une position élevée de façon à ménager un espace de couchage, ledit toit mobile étant relié à un cadre (4) rapporté sur une portion périphérique de pavillon (2) dudit véhicule, ladite portion délimitant une ouverture (20), des moyens de levage (3,31) étant intercalés entre ledit toit mobile et ledit cadre, caractérisé en ce que ledit cadre comprend au moins une goulotte (41) s'étendant à l'intérieur de ladite ouverture et dont le fond (410) s'étend sous le niveau de ladite portion périphérique de pavillon, lesdits moyens de levage étant destinés à venir se loger dans ladite ou lesdites goulottes dans ladite position fermée dudit toit mobile.

## Description

Le domaine de l'invention est celui de la conception et de la fabrication de véhicules automobiles. Plus précisément, l'invention concerne des véhicules pourvus d'un toit mobile destiné à être amené dans une position élevée par rapport à l'habitacle du véhicule, ceci de façon à augmenter le volume de l'habitacle du véhicule en vue de ménager un espace de couchage.

Dans le domaine de l'invention, il est désormais courant de proposer des véhicules, que ce soit dans la gamme des monospaces ou des véhicules utilitaires aménagés, qui offrent des possibilités de transformation pour ménager à l'intérieur du véhicule un espace de couchage.

Pour ce faire, une première solution classique consiste à équiper l'habitacle du véhicule d'une banquette transformable en plan de couchage.

Selon une autre solution, le véhicule est équipé d'un élément de couchage au niveau du pavillon du véhicule (en lieu et place du pavillon), le véhicule comprenant dans ce cas un toit mobile entre une position fermée et une position en élévation de façon à constituer un volume au-dessus de l'élément de couchage permettant l'utilisation de celui-ci. De plus, une toile est solidarisée au toit mobile de telle sorte que, lorsque le toit mobile occupe une position en élévation, la toile forme un espace clos autour de l'élément de couchage.

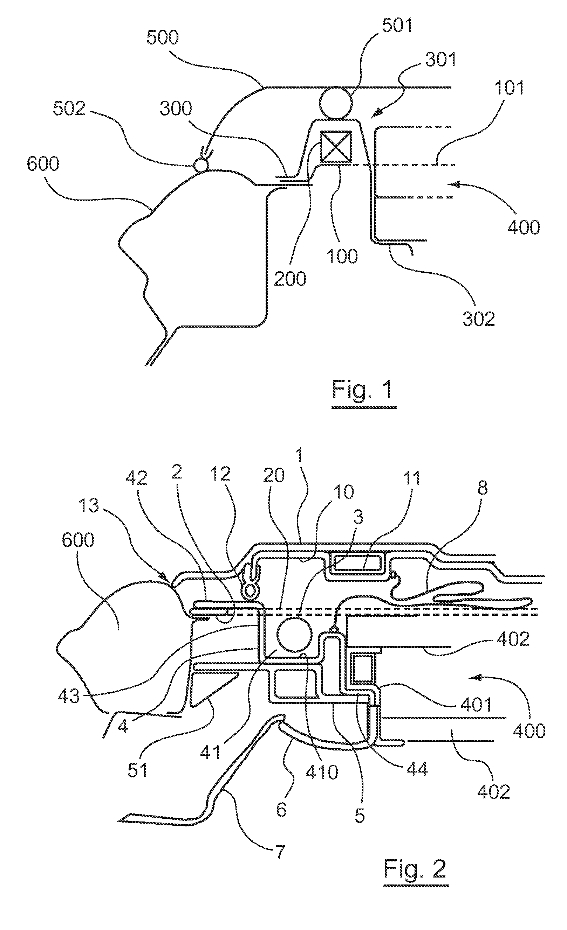

Le procédé de transformation du véhicule en vue d'équiper ce dernier d'un tel espace de couchage est décrit ci-après en référence à la figure 1.

Dans un premier temps, on découpe le pavillon 100 d'origine du véhicule (la partie découpée 101 du pavillon apparaissant en traits pointillés). L'élément de pavillon restant constitue une portion périphérique du pavillon délimitant une ouverture.

Un élément de renfort 200 est ensuite rapporté sur la portion périphérique de pavillon.

Un cadre 300 est rapporté sur la portion périphérique de pavillon, ce cadre présentant une protubérance 301 destinée à épouser l'élément de renfort 200, ainsi qu'un plan de base 302 destiné à recevoir un élément de couchage 400 tel qu'un matelas.

Un toit mobile 500 peut alors être rapporté sur le cadre 300, en étant relié à ce dernier par des moyens de levage, constitués classiquement par un compas à biellette et un vérin montés de chaque côté du cadre.

Une telle conception implique plusieurs inconvénients parmi lesquels :
- le toit mobile, en position fermée (tel qu'illustré par la figure 1) présente, vue en coupe transversale, une forme bombée prenant l'allure d'une bosse en partie supérieure du véhicule et conférant à celui-ci un aspect particulièrement inesthétique ; cette forme bombée est liée au fait que la hauteur du toit mobile doit permettre, en position fermée, d'englober les hauteurs cumulées du renfort, du cadre et des moyens de levage ;
- un joint périphérique 502 est monté sur les rebords du toit mobile 500, de façon à venir en contact avec les côtés de caisse 600 du véhicule, en vue d'assurer une étanchéité à l'eau en position de fermeture du toit mobile ; à nouveau, un tel joint (généralement de couleur noir) confère un aspect inesthétique au véhicule.

Outre les inconvénients d'ordre esthétique d'une telle conception, un tel ensemble tend à augmenter notablement la hauteur du véhicule par rapport à sa hauteur d'origine.

Il en résulte que :
- la prise au vent du véhicule est augmentée, ceci tendant à augmenter la consommation en carburant du véhicule, ce qui n'est évidemment pas souhaitable ;
- la hauteur du véhicule est généralement amenée à dépasser les deux mètres, ce qui entraîne un changement de catégorie du véhicule selon les barèmes des péages autoroutiers et implique le paiement d'une surtaxe.

L'invention a notamment pour objectif de pallier ces inconvénients de l'art antérieur.

Plus précisément, l'invention a pour objectif de proposer une technique pour équiper un véhicule d'un toit mobile entre une position fermée et une position élevée dans laquelle un espace de couchage est ménagé, qui permette d'améliorer notablement l'aspect esthétique du véhicule lorsque le toit mobile occupe une position fermée.

L'invention a également pour objectif de proposer une telle technique qui permette de limiter notablement l'augmentation de hauteur d'un véhicule équipé d'un toit mobile.

Ces objectifs, ainsi que d'autres qui apparaîtront par la suite, sont atteints grâce à l'invention qui a pour objet un véhicule automobile, présentant un toit mobile entre une position de fermée et une position élevée de façon à ménager un espace de couchage, ledit toit mobile étant relié à un cadre rapporté sur une portion périphérique de pavillon dudit véhicule, ladite portion délimitant une ouverture, des moyens de levage étant intercalés entre ledit toit mobile et ledit cadre, **caractérisé en ce que** ledit cadre comprend au moins une goulotte s'étendant à l'intérieur de ladite ouverture et dont le fond s'étend sous le niveau de ladite portion périphérique de pavillon, lesdits moyens de levage étant destinés à venir se loger dans ladite ou lesdites goulottes dans ladite position fermée dudit toit mobile.

De cette façon, il est possible, grâce à l'invention, de loger tout le mécanisme de levage du toit mobile sous le niveau du pavillon lorsque le toit mobile occupe une position fermée. Il en résulte que, dans cette position, le toit mobile occupe une position notablement plus basse que celle occupée classiquement par un toit mobile monté selon l'art antérieur.

Comme cela va apparaître plus clairement par la suite, le toit mobile en position fermée se positionne directement au voisinage de la portion de pavillon conservée sur le véhicule pour le montage du toit mobile (le pavillon d'origine ayant au préalable été découpé pour ménager une ouverture). Par conséquent, le toit mobile occupe en position fermée une position quasiment identique à celle qu'occuperait le toit d'un véhicule non équipé d'un toit mobile.

En effet, il est possible grâce à l'invention de réduire l'augmentation de hauteur du véhicule équipé d'un toit mobile selon l'invention à seulement 3 cm.

L'esthétique général du véhicule n'est donc pas affecté, ou quasiment, par le montage d'un toit mobile selon l'invention.

En outre, l'augmentation de hauteur du véhicule équipé étant limitée, on évite de :
- engendrer une augmentation importante de la consommation en carburant du véhicule ;
- un changement de catégorie de véhicule selon les barèmes autoroutiers, susceptible d'entraîner le paiement de surtaxes.

Selon une solution avantageuse, ledit cadre présente au moins une protubérance périphérique destinée à venir en contact, par l'intermédiaire d'un joint, avec ledit toit mobile en position fermée.

On peut ainsi assurer de façon efficace l'étanchéité à l'eau entre le toit mobile et le cadre, évitant l'infiltration d'eau en direction de l'intérieur de l'habitacle du véhicule.

Dans ce cas, ledit contact par l'intermédiaire dudit joint est préférentiellement positionné sous ledit toit mobile, à distance des côtés dudit toit mobile.

Ainsi, le joint d'étanchéité est placé dans une position selon laquelle il n'est pas visible. Ceci contribue à l'amélioration de l'esthétique du véhicule équipé d'un toit mobile selon l'invention, par opposition au joint monté sur les côtés du toit mobile selon l'art antérieur.

Selon une première variante envisageable, ledit joint est porté par ledit cadre.

Selon une deuxième variante envisageable, ledit joint est porté par ledit toit mobile.

Selon une autre caractéristique de l'invention, le véhicule comprend au moins un renfort dudit cadre, ledit ou lesdits renforts étant préférentiellement montés sous le niveau de ladite portion périphérique de pavillon.

On comprend que, de cette façon, on peut atteindre l'objectif recherché par l'invention, à savoir la limitation de l'augmentation de la hauteur du véhicule, ceci indépendamment de la hauteur des renforts associés à une portion périphérique de pavillon. En d'autres termes, il n'est pas utile, en vue de limiter la hauteur totale du véhicule, de devoir limiter la hauteur du renfort dans le calcul de la section de celui-ci pour une résistance mécanique déterminée.

Avantageusement, ledit ou lesdits renforts sont portés par des moyens supports solidarisés à des côtés de caisse du véhicule.

On utilise ainsi la portance des côtés de caisse pour consolider la portion périphérique de pavillon, par l'intermédiaire de renforts.

Avantageusement, le véhicule comprend une goulotte longitudinale de chaque côté de ladite ouverture.

De cette façon, il est possible, en position fermée du toit, d'escamoter les moyens de levage classiquement mis en oeuvre de chaque côté de l'ouverture.

Selon une autre caractéristique avantageuse, ladite ou lesdites goulottes présentent une profondeur décroissante selon l'axe longitudinal du véhicule pour permettre l'écoulement et l'évacuation d'eau à partir de ladite ou desdites goulottes.

Il est en effet possible, en position élevée du toit mobile, que de l'eau de pluie ruisselle jusque dans la goulotte. La profondeur décroissante des goulottes permet dans ce cas de diriger l'écoulement de l'eau en vue de son évacuation.

Préférentiellement, ladite portion périphérique de pavillon présente une pente selon l'axe longitudinal du véhicule, le fond de ladite ou desdites goulottes présentant une pente de même direction que celle de ladite portion périphérique de pavillon.

La pente du fond des goulottes se présente donc en cohérence avec la pente du pavillon souvent présente sur des véhicules de type monospace ou des véhicules utilitaires aménagés.

Selon une solution préférée, ladite ou lesdites goulottes sont bordées par un rebord externe dont la hauteur décroît longitudinalement jusqu'à ce que, à l'une des extrémités de ladite ouverture, un prolongement du fond de ladite ou desdites goulottes soit au même niveau que ladite portion périphérique de pavillon.

Ainsi, on évite la mise en oeuvre d'une rainure communiquant avec les goulottes en vue de permettre l'évacuation d'eau.

En d'autres termes, on parvient, par une disposition optimisée du fond de la goulotte, du rebord externe de la goulotte et du pavillon, à permettre l'évacuation d'eau à partir de la goulotte sans nuire à l'esthétisme du véhicule.

Préférentiellement, ledit prolongement du fond de ladite ou desdites goulottes est au même niveau que ladite portion périphérique de pavillon en partie avant de ladite ouverture.

Dans ce cas, les goulottes longitudinales sont reliées par une goulotte transversale en partie arrière de ladite ouverture.

Ainsi, on peut recueillir l'eau susceptible de s'accumuler en partie arrière du véhicule lorsque le toit mobile occupe une position élevée, puis diriger l'eau recueillie vers l'une et/ou l'autre des goulottes longitudinales en vue de son évacuation.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue schématique en coupe d'un toit mobile selon l'art antérieur ;
- la figure 2 est une vue schématique en coupe du montage d'un toit mobile selon l'invention ;
- la figure 3 est une autre vue schématique en coupe transversale d'un toit mobile selon l'invention ;
- les figures 4 et 5 sont des vues d'un toit mobile selon l'invention, en position fermée, respectivement vu en perspective et vue de côté ;
- les figures 6 et 7 sont des vues d'un toit mobile selon l'invention, en position élevée, respectivement en perspective et vu de côté.

Tel qu'indiqué précédemment, le principe de l'invention réside dans le fait de monter un toit sur un véhicule de façon mobile entre une position fermée et une position élevée par rapport à une ouverture ménagée dans le pavillon du véhicule, ceci par l'intermédiaire d'un cadre présentant une ou plusieurs goulottes s'inscrivant à l'intérieur de l'ouverture et positionnées de façon à recevoir les moyens de levage du toit mobile sous le niveau du pavillon.

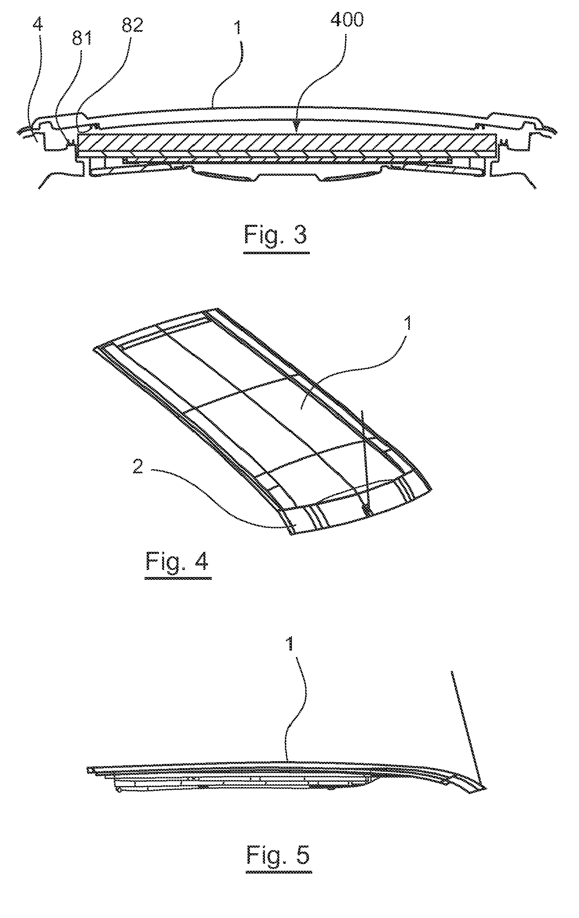

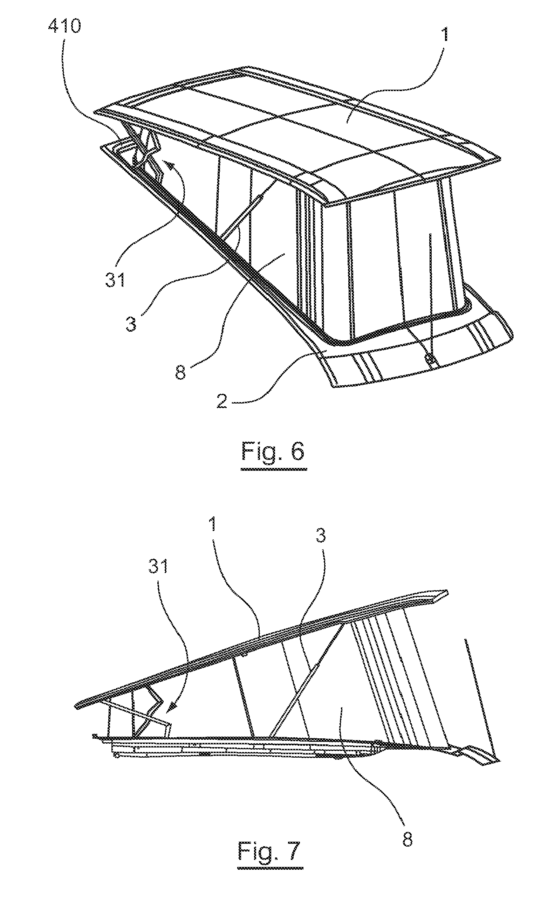

En référence aux figures 4 à 7, un toit mobile 1 selon l'invention est mobile par rapport au pavillon 2 du véhicule entre une position fermée par rapport à une ouverture ménagée dans le pavillon (figures 4 et 5) et une position élevée par rapport au pavillon (figures 6 et 7). Une toile 8 est reliée d'une part au toit mobile 1 et d'autre part à un élément fixe du véhicule, cette toile s'étendant tout autour de l'ouverture ménagée dans le pavillon de telle sorte que, en position élevée du toit mobile 1, la toile 8 délimite une cabine à l'intérieur de laquelle s'étend un espace de couchage.

Bien entendu, en position fermée du toit mobile 1, la toile 8 occupe une position repliée sous le toit mobile de façon à s'inscrire dans un encombrement minimal.

Par ailleurs, le toit mobile 1 est relié à un cadre (décrit plus en détail par la suite) par l'intermédiaire de moyens de levage.

Selon le présent mode de réalisation, ces moyens de levage sont prévus de chaque côté du toit mobile (c'est-à-dire de façon à agir au niveau des bords longitudinaux du toit mobile, par rapport à l'axe longitudinal du véhicule) et sont constitués, de chaque côté, d'un vérin 3 et d'un compas à biellette 31.

On note que les vérins 3 sont montés de façon articulée (pivotante) d'une part sur le toit mobile et, d'autre part, sur le cadre. Il en résulte que le vérin est mobile entre deux positions :
- une position rétractée lorsque le toit mobile occupe une position fermée, les vérins occupant alors une position allongée sous le toit mobile et dans un plan sensiblement parallèle à celui du toit mobile ;
- une position déployée (figures 6 et 7) lorsque le toit occupe une position élevée, formant avec le plan du pavillon un angle qui croît progressivement au fur et à mesure de l'élévation du toit mobile, jusqu'à atteindre une position telle que celle illustrée par la figure 7.

On note que, selon le présent mode de réalisation, le compas 31, est dimensionné de telle sorte que, en position élevée, le toit mobile occupe une position inclinée, la hauteur de l'espace de couchage délimitée par la toile 8 étant inférieure du côté des compas, ce côté de l'espace de couchage correspondant à priori à la position occupée par les pieds d'une personne allongée dans l'espace de couchage.

Toutefois, il est envisageable d'adopter un autre dimensionnement des compas et/ou des vérins de telle sorte que le toit mobile occupe, dans la position élevée, une position sensiblement horizontale.

On note d'ores et déjà qu'un toit mobile selon l'invention présente, en position fermée, une configuration selon laquelle le toit mobile occupe une position très proche du pavillon, induisant une augmentation relativement faible de la hauteur totale du véhicule (de l'ordre de 3 cm, voire moins). Ceci apparaît clairement sur les figures 3, 4 et 5.

Ceci est obtenu grâce au principe de l'invention qui est décrit ci-après en référence à la figure 2.

Tel que cela apparaît sur cette figure, le montage d'un toit mobile comprend une étape de découpe du pavillon d'origine 2 du véhicule, cette découpe visant à obtenir une ouverture 20 (représentée en traits pointillés).

Bien entendu, l'opération de montage d'un toit mobile selon l'invention peut prévoir la fabrication et le montage d'une portion de pavillon prédécoupé et présentant, par conséquent, directement l'ouverture 20 (l'opération de découpe n'étant dans ce cas pas réalisée directement sur le véhicule).

Tel que cela apparaît sur la figure 2, le montage d'un toit mobile 1 selon l'invention comprend la mise en oeuvre de :
- une portion périphérique de pavillon 2, fixée sur les côtés de caisse 600 du véhicule ;
- un cadre 4 rapporté sur la portion périphérique de pavillon 2, et fixé sur celui-ci par collage (ou par soudage selon une variante envisageable) ;
- des moyens de levage tels que ceux décrits précédemment, comprenant notamment un vérin 3, ces moyens de levage reliant le cadre 4 au toit mobile 1.

On note que le cadre 4 présente un rebord formant une protubérance périphérique du cadre 4, cette protubérance périphérique étant en appui au moins sur toute la longueur des côtés longitudinaux de la portion périphérique de pavillon 2.

Selon le principe de l'invention, le cadre présente une goulotte 41 s'étendant à l'intérieur du périmètre délimité par la portion périphérique de pavillon 2 ou, en d'autres termes, à l'intérieur de l'ouverture 20.

De plus, le fond 410 de la goulotte 41 s'étend sous le niveau de la portion périphérique de pavillon 2 de telle sorte que, en position fermée du toit mobile 1, les moyens de levage viennent se loger dans la goulotte 41.

Tel qu'indiqué précédemment, les moyens de levage du toit mobile 1 sont prévus de chaque côté longitudinal du toit mobile, le cadre 4 présentant par conséquent une goulotte 41 s'étendant longitudinalement de chaque côté longitudinal du cadre.

Bien entendu, le cadre 4 offre en outre une surface d'appui 44 destinée à supporter une structure de couchage 401, portant elle-même un élément matelassé 402.

Par ailleurs, le montage d'un toit mobile selon l'invention prévoit également la mise en oeuvre d'un élément de renfort du cadre 4, cet élément de renfort prenant la forme d'un contre-cadre 5 constituant un appui périphérique pour le cadre 4.

Tel que cela apparaît, ce contre-cadre 5 est monté également sous le niveau de la portion périphérique de pavillon 2, le cadre prenant appui sur le contre-cadre 5 au niveau de la goulotte 41.

De plus, ce contre-cadre 5 est porté par des moyens supports 51 (prenant schématiquement la forme de cornières, solidarisés sur les côtés de caisse 600 du véhicule). Ces moyens supports peuvent être fixés sur les côtés de caisse par tout moyen approprié, par exemple par soudage, boulonnage, collage...

Selon une autre caractéristique de l'invention, un joint d'étanchéité 12 est prévu pour assurer l'étanchéité à l'eau entre le toit mobile 1 et le cadre 4.

Tel que cela apparaît sur la figure 2, l'étanchéité est assurée entre le cadre et le toit mobile au niveau de la protubérance 42 du cadre 4 de telle sorte que le joint soit positionné sous le toit mobile 1, à distance des bords 13 du toit mobile (les termes « à distance » indiquant que le joint est placé de telle sorte qu'il ne soit pas visible du dessus ou par les côtés du toit mobile lorsque celui-ci occupe une position fermée ; cette distance peut donc varier autant que de besoin).

On note qu'une garniture 10 est montée et fixée sous le toit mobile 1. Le joint 12 d'étanchéité est, selon le présent mode de réalisation, monté à chevauchement sur le bord périphérique de la garniture 10.

Un ou plusieurs éléments de renfort 11 sont intercalés entre la garniture 10 et le toit mobile 1.

Des éléments de finition intérieurs 6 sont fixés sur la structure de couchage de façon à combler l'espace entre la structure de couchage et la garniture latérale d'origine 7 du véhicule.

Selon une variante envisageable, le joint pourrait, avec un résultat similaire, être monté sur la protubérance périphérique 42 du cadre 4.

Par ailleurs, une toile 8, destinée à former une cabine de couchage en position déployée (correspondant à la position levée du toit mobile), est couplée par l'une de ses extrémités au toit mobile 1, et par l'autre de ses extrémités au cadre 4, en l'occurrence sur le rebord interne de la goulotte 41.

Selon encore une autre caractéristique de l'invention, les goulottes 41 présentent une profondeur décroissante selon l'axe longitudinal du véhicule pour permettre l'écoulement et l'évacuation d'eau à partir des goulottes.

Plus précisément, tel que cela apparaît notamment sur la figure 5, la portion périphérique de pavillon 2 présente une pente descendante à partir de l'intérieur du véhicule en direction de l'avant du véhicule (c'est-à-dire selon l'axe longitudinal du véhicule), et le fond 410 des goulottes 41 présente une pente selon la même direction que celle de la portion périphérique de pavillon.

Selon un mode de réalisation préférentiel, le fond 410 des goulottes présente un pente dont la déclivité est légèrement inférieure à celle du bord longitudinal de la portion périphérique de pavillon 2, ceci étant obtenu par une hauteur décroissante (de l'arrière du véhicule vers l'avant du véhicule) du rebord externe 43 (figure 2) bordant les goulottes 41. Ainsi, la hauteur de ce rebord externe décroît jusqu'à ce que, à l'extrémité avant de l'ouverture 20, le fond des goulottes 41 se prolonge par une portion dont le niveau rejoint celui de la portion périphérique de pavillon (le rebord externe 43 s'effaçant entre cette portion et la portion périphérique de pavillon 2). A ce niveau, l'eau contenue dans la goulotte s'évacue donc en l'absence de rebords externes et sous l'effet de la pente de la goulotte.

On note qu'en partie arrière de l'ouverture 20, les goulottes s'étendant longitudinalement en côté du cadre sont reliées par une goulotte transversale 410.

## Revendications

1. Véhicule automobile, présentant un toit mobile entre une position de fermée et une position élevée de façon à ménager un espace de couchage, ledit toit mobile étant relié à un cadre rapporté sur une portion périphérique de pavillon dudit véhicule, ladite portion délimitant une ouverture, des moyens de levage étant intercalés entre ledit toit mobile et ledit cadre,
**caractérisé en ce que** ledit cadre comprend au moins une goulotte s'étendant à l'intérieur de ladite ouverture et dont le fond s'étend sous le niveau de ladite portion périphérique de pavillon, lesdits moyens de levage étant destinés à venir se loger dans ladite ou lesdites goulottes dans ladite position fermée dudit toit mobile.

2. Véhicule selon la revendication 1, **caractérisé en ce que** ledit cadre présente au moins une protubérance périphérique destinée à venir en contact, par l'intermédiaire d'un joint, avec ledit toit mobile dans ladite position fermée.

3. Véhicule selon la revendication 2, **caractérisé en ce que** ledit contact par l'intermédiaire dudit joint est positionné sous ledit toit mobile, à distance des côtés dudit toit mobile.

4. Véhicule selon l'une des revendications 2 et 3, **caractérisé en ce que** ledit joint est porté par ledit cadre.

5. Véhicule selon l'une des revendications 2 et 3, **caractérisé en ce que** ledit joint est porté par ledit toit mobile.

6. Véhicule selon l'une des revendications 1 à 5, **caractérisé en ce qu'**il comprend au moins un renfort dudit cadre.

7. Véhicule selon la revendication 6, **caractérisé en ce que** ledit ou lesdits renforts sont montés sous le niveau de ladite portion périphérique de pavillon.

8. Véhicule selon la revendication 7, **caractérisé en ce que** ledit ou lesdits renforts sont portés par des moyens supports solidarisés à des côtés de caisse du véhicule.

9. Véhicule selon l'une quelconque des revendications 1 à 8, **caractérisé en ce qu'**il comprend une goulotte longitudinale de chaque côté de ladite ouverture.

10. Véhicule selon l'une quelconque des revendications 1 à 9, **caractérisé en ce que** ladite ou lesdites goulottes présentent une profondeur décroissante selon l'axe longitudinal du véhicule pour permettre l'écoulement et l'évacuation d'eau à partir de ladite ou desdites goulottes.

11. Véhicule selon la revendication 10, **caractérisé en ce que** ladite portion périphérique de pavillon présente une pente selon l'axe longitudinal du véhicule, le fond de ladite ou desdites goulottes présentant une pente de même direction que celle de ladite portion périphérique de pavillon.

12. Véhicule selon les revendications 10 et 11, **caractérisé en ce que** ladite ou lesdites goulottes sont bordés par un rebord externe dont la hauteur décroît longitudinalement jusqu'à ce que, à l'une des extrémités de ladite ouverture, un prolongement du fond de ladite ou desdites goulottes soit au même niveau que ladite portion périphérique de pavillon.

13. Véhicule selon la revendication 12, **caractérisé en ce que** ledit prolongement du fond de ladite ou desdites goulottes est au même niveau que ladite portion périphérique de pavillon en partie avant de ladite ouverture.

14. Véhicule selon les revendications 9 et 13, **caractérisé en ce que**, en partie arrière de ladite ouverture, les goulottes longitudinales sont reliées par une goulotte transversale.
